# EUROPEAN PATENT SPECIFICATION

(11) **EP 2 143 766 B1**
(45) Date of publication and mention of the grant of the patent: **02.09.2015**
(21) Application number: 09251637.6
(22) Date of filing: 24.06.2009
(51) Int. Cl.: C09D 5/16, C08L 83/12, C09D 183/04, C09D 183/12

(54) **Antifouling coating composition and underwater structure using the same**
Fäulnisverhindernde Beschichtungszusammensetzung und Unterwasserstruktur damit
Composition de revêtement antisalissure et structure sous-marine l'utilisant

(30) Priority: 07.07.2008 JP 2008176496
(43) Date of publication of application: 13.01.2010
(73) Proprietor: Shin-Etsu Chemical Co., Ltd., Tokyo (JP)
(72) Inventor: Sakamoto, Takafumi, Annaka-shi, Gunma-ken (JP)
(74) Representative: Stoner, Gerard Patrick

(56) References cited:
- EP-A1- 2 055 750
- WO-A1-2008/064965
- DATABASE WPI Week 200831 Thomson Scientific, London, GB; AN 2008-E56757 XP002551596 -& JP 2008 007655 A (OGI KAGAKU KOGYO KK) 17 January 2008 (2008-01-17)
- DATABASE WPI Week 199316 Thomson Scientific, London, GB; AN 1993-129044 XP002551574 & JP 05 064991 A (RICOH KK) 19 March 1993 (1993-03-19)

## Description

### TECHNICAL FIELD

This invention relates to antifouling coating compositions having a long-term antifouling capability. More particularly, it relates to coating compositions which can be applied to underwater structures (e.g., ships, harbor facilities, buoys, pipe lines, bridges, submarine stations, submarine oil well excavation units, power plant water conduits, fish culture nets and fixed shore nets) to form antifouling coatings which are effective for preventing aquatic organisms from depositing and growing on structure surfaces. It also relates to an underwater structure using the composition.

### BACKGROUND

Once underwater structures are installed or in service, aquatic organisms living in waters like sea and rivers such as barnacle, lamp chimney, serpula, mussel, Bryozoa, and seaweeds (e.g., Enteromorpha and Ulva) deposit and grow on splashed and submerged surface areas, causing various damages. In the case of a ship, for example, the deposition of organisms to the hull increases frictional resistance to water to reduce the speed. The fuel consumption must be increased to maintain a certain speed, which is uneconomical. If organisms deposit on structures of a harbor facility which are fixed at or below the water surface, it becomes difficult for the structures to exert their own function and sometimes, their substrates can be eroded. If organisms deposit on fish culture nets or fixed shore nets, net openings are clogged, eventually leading to the death of fishes.

Conventional means for preventing deposition and growth of aquatic organisms on underwater structures is the application to such structures of antifouling paints having incorporated therein toxic antifouling agents such as organotin compounds and cuprous oxide. Although such antifouling paints are effective for substantially preventing deposition and growth of aquatic organisms, the use of toxic antifouling agents is harmful to the environmental safety and hygiene during preparation and application of paints. Additionally, the toxic antifouling agent is slowly leached out of the coating in water, with the risk of contaminating the surrounding water area over a long term. For this reason, the use of toxic antifouling agents was legally banned.

There have been proposed paint compositions which are effective for preventing deposition and growth of aquatic organisms, but free of toxic antifouling agents. Paint compositions which are designed to impart antifouling property by reducing the surface tension of coatings include non-toxic antifouling paint compositions comprising room temperature-curable silicone rubber compositions and liquid paraffin or petrolatum (see JP-A 58-13673 and JP-A 62-84166). Japanese Patent Nos. 2503986 and 2952375 disclose non-toxic antifouling paint compositions comprising a reaction curable silicone resin composition and a less compatible, non-reactive, polar group-containing silicone resin wherein under the impetus of volume shrinkage associated with curing of the reaction curable silicone resin, the polar group-containing silicone resin bleeds out of the surface, which cooperates with the low surface tension of curable silicone resin, to exhibit antifouling property.

These non-toxic antifouling paint compositions use a polyoxyethylene group-containing silicone resin having ethylene oxide or propylene oxide added to a silicon atom via a C-C bond or a silicone resin having an alkoxy group bonded to a silicon atom at a molecular end via an ethylene oxide or propylene oxide group as the less compatible, non-reactive, polar group-containing silicone resin. Coatings of these compositions exert antifouling property by utilizing the oil bleeding phenomenon that the silicone oil bleeds out of the coating. Since the antifouling property largely depends on the release with time of silicone oil or active ingredient, the coatings suffer a substantial loss of antifouling property after the release of active ingredient ceases. It is then difficult for the coatings to maintain an antifouling capability over a long period of time.

### Citation List

Patent document 1: JP-A 58-13673
Patent document 2: JP-A 62-84166
Patent document 3: JP 2503986
Patent document 4: USP 5,218,059 (JP 2952375)

JP2008007655 discloses, an anti-fouling paint comprising 40-500 parts of an acrylic binder emulsion and 50-500 parts of an alkyl aralkyl polyether modified silicone oil as an elution regulator.

EP2055750 discloses an anti-fouling composition comprising 100 parts of a room temperature curable silicone resin and 10-300 parts polyether-modified silicone oil in which some methyl groups are replaced by polyether-long chain alkyl-aralkyl groups.

WO2008/064965 discloses a silicon oil, being the reaction product of octanol, styrene oxide and a polyether, comprised at 1% in a coating composition as an anti-foaming compound.

An object of the present invention is to provide new and useful antifouling coating compositions having a long-term antifouling capability, methods of using them, and underwater structures coated with them.

Studying non-reactive silicone oil as the bleed oil for antifouling paints, the inventor has found that a coating composition comprising a silicone oil having a polyether, a long-chain alkyl, and an aralkyl group in a molecule has low surface tension, water repellency and parting property so that a coating thereof is resistant to deposition of aquatic organisms and maintains such improved antifouling property over a long term.

The invention relates to an antifouling coating composition comprising a binder resin and a bleed oil in the form of a non-reactive silicone oil. The inventor has found that a non-reactive silicone oil of a specific structure facilitates to form a coating which undergoes little or no change of its surface state even after long-term exposure to seawater. This silicone oil has a polyether, a long-chain alkyl, and an aralkyl group in a molecule and exhibits a good profile of low surface tension due to the polyether group, water repellency due to the long-chain alkyl group, and parting property due to the aralkyl group. The use of this silicone oil enables formation of a coating which is resistant to fouling by aquatic organisms. Particularly when a curable silicone resin is used as the binder resin (organic resin), the resulting coating also has long-term weather resistance and water resistance in that it is little degraded by sunlight or seawater.

The inventor has also found that the surface state of a coating can be evaluated in terms of a contact angle thereof with water because the contact angle is closely related to the deposition of organisms. Specifically, the less a change of the contact angle before and after immersion in seawater, the less aquatic organisms deposit.

In one aspect the present invention provides an antifouling coating composition comprising:
(A) 100 parts by weight of a room temperature-curable silicone resin, and
(B) 1 to 200 parts by weight of a silicone oil having a polyether, a long-chain alkyl, and an aralkyl group in a molecule.

In component (B), the polyether group has the structure:

-CₖH₂ₖ-O-(C₂H₄O)ₘ-(C₃H₆O)ₙ-R¹

wherein k is an integer of 1 to 3, m and n are an integer of 0 to 40, m+n is an integer of 1 to 50, R¹ is selected from hydrogen, methyl, butyl, allyl, and acetyl; the long-chain alkyl group has the structure:

-CₐH₂ₐ₊₁

wherein a is an integer of 4 to 20; and the aralkyl group has the structure: 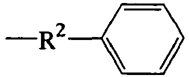 wherein R² is an alkylene group of 1 to 4 carbon atoms.

In a preferred embodiment, the composition cures into a coating having a contact angle with water which experiences a change within 20 degrees before and after immersion in seawater.

The present invention also provides an underwater structure coated with the composition.

### ADVANTAGEOUS EFFECTS

We find that antifouling coating compositions as described exhibits excellent antifouling property against aquatic organisms over a long period of time. When the composition is applied to an underwater structure, the coating is effective in preventing aquatic organisms from adhering to or growing on the surface of the underwater structure and maintains the effect over time. Particularly when a room temperature-curable silicone resin is used as the curable organic resin, the resulting coating is non-toxic and antifouling enough to prevent aquatic organisms from adhering to or growing on the substrate surface.

### DESCRIPTION OF EMBODIMENTS

The singular forms "a," "an" and "the" include plural referents unless the context clearly dictates otherwise.

As used herein, the term "antifouling coating composition" refers to a coating composition which is applicable to structure surfaces and capable of preventing aquatic organisms from depositing (or fouling) and growing on the structure surfaces.

The term "curable organic resin" is defined as having an ability to crosslink at room temperature or elevated temperature in the presence or absence of a crosslinker. Where an organic resin is crosslinkable in the absence of a crosslinker, the "curable organic resin" consists of that resin. Where an organic resin is crosslinkable in the presence of a crosslinker, the "curable organic resin" comprises that organic resin in combination with the crosslinker. For example, a room temperature-curable silicone resin comprises an organopolysiloxane having a room temperature-cure reactive group and a crosslinker for crosslinking the organopolysiloxane.

Briefly stated, the antifouling coating composition comprises (A) a curable organic resin, and (B) a silicone oil having a polyether, a long-chain alkyl, and an aralkyl group in a molecule.

The antifouling coating composition is a curable resin composition which may cure at room temperature (lower than 50°C), at elevated temperature (at or above 50°C), or upon exposure to ultraviolet light (UV) or electron beam (EB), and preferably a room temperature-curable resin composition. The composition may be of one, two, or multi-component system.

### Component (A)

Component (A) is a curable organic resin which is a binder component to form a paint coating. The curable organic resin is a curable silicone resin which is preferred for weather and water resistance, with room temperature-curable silicone resins being used.

A base polymer of the curable silicone resin is an organopolysiloxane having at least two silicon-bonded cure reactive groups in a molecule. When the organopolysiloxane is room temperature curable, the cure reactive groups include hydroxyl and hydrolyzable groups. Examples of the hydrolyzable group include C₁-C₈ alkoxy groups such as methoxy, ethoxy and propoxy; alkoxyalkoxy groups such as methoxyethoxy, ethoxyethoxy and methoxypropoxy; acyloxy groups such as acetoxy, octanoyloxy and benzoyloxy; alkenyloxy groups such as vinyloxy, isopropenyloxy and 1-ethyl-2-methylvinyloxy; ketoxime groups such as dimethylketoxime, methylethylketoxime and diethylketoxime; amino groups such as dimethylamino, diethylamino, butylamino and cyclohexylamino; aminoxy groups such as dimethylaminoxy and diethylaminoxy; and amide groups such as N-methylacetamide, N-ethylacetamide and N-methylbenzamide. Of these, alkoxy is preferred.

In addition to the cure reactive group, the organopolysiloxane may have other groups, which include alkyl groups such as methyl, ethyl, propyl, butyl, pentyl, hexyl, heptyl, octyl, nonyl, decyl and octadecyl; cycloalkyl groups such as cyclopentyl and cyclohexyl; alkenyl groups such as vinyl, allyl, butenyl, pentenyl and hexenyl; aryl groups such as phenyl, tolyl, xylyl and α- and β-naphthyl; aralkyl groups such as benzyl, 2-phenylethyl and 3-phenylpropyl; and substituted forms of the foregoing groups in which some or all hydrogen atoms are substituted by halogen atoms (e.g., F, Cl and Br) or cyano groups, such as 3-chloropropyl, 3,3,3-trifluoropropyl and 2-cyanoethyl. Of these, methyl, ethyl, vinyl and phenyl are preferred, with methyl being most preferred.

The organopolysiloxane preferably has such a degree of polymerization as to give a viscosity at 23°C of 20 to 1,000,000 mPa-s, more preferably 100 to 500,000 mPa-s, and even more preferably 1,000 to 50,000 mPa-s. If the viscosity is less than 20 mPa-s at 23°C, it may become difficult to form a coating having good physical and mechanical strength. If the viscosity is more than 1,000,000 mPa-s at 23°C, the composition may have too high a viscosity to work on use. It is noted that throughout the specification, the viscosity may be measured by a rotational viscometer.

Preferred examples of the organopolysilane are diorganopolysiloxanes including dimethylpolysiloxanes which are terminated at both ends with silanol or hydrolyzable group-containing silyl groups (the hydrolyzable group being as specified above), as represented by the following formulae. 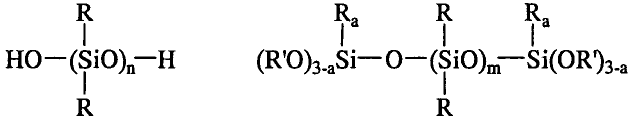 Herein, R is a group as exemplified above for the other groups (other than the cure reactive groups), R' is an alkyl group such as methyl, ethyl or propyl, n and m are such numbers that the diorganopolysiloxane may have a viscosity of 20 to 1,000,000 mPa-s at 23°C, and a is 0 or 1.

When the room temperature-curable organopolysiloxane terminated at both ends with silanol or hydrolyzable group-containing silyl groups is used, a silane having hydrolyzable groups and/or a partial hydrolytic condensate thereof is employed as the crosslinker. The silane and/or partial hydrolytic condensate thereof should have at least two hydrolyzable groups in a molecule, preferably at least three hydrolyzable groups in a molecule, and may have another group (other than the hydrolyzable group) bonded to a silicon atom. Its molecular structure may be either a silane or siloxane structure. In particular, the siloxane structure may be either straight, branched or cyclic.

The hydrolyzable groups are as exemplified above for the hydrolyzable group, other than hydroxyl group, of the organopolysiloxane as component (A). Inter alia, alkoxy, ketoxime and isopropenoxy groups are preferred.

The other groups (other than the hydrolyzable group) are substituted or unsubstituted monovalent hydrocarbon groups of 1 to 6 carbon atoms, examples of which include alkyl groups such as methyl, ethyl, propyl, butyl, pentyl and hexyl; cycloalkyl groups such as cyclopentyl and cyclohexyl; aryl groups such as phenyl and tolyl; aralkyl groups such as benzyl and 2-phenylethyl; alkenyl groups such as vinyl, allyl, butenyl, pentenyl and hexenyl; and halogenated alkyl groups such as 3,3,3-trifluoropropyl and 3-chloropropyl. Of these, methyl, ethyl, phenyl and vinyl are preferred.

Illustrative examples of the crosslinker include ethyl silicate, propyl silicate, methyltrimethoxysilane, methyltriethoxysilane, vinyltrimethoxysilane, vinyltriethoxysilane, methyltris(methoxyethoxy)silane, vinyltris(methoxyethoxy)silane, methyltripropenoxysilane, methyltriacetoxysilane, vinyltriacetoxysilane, methyltri(methylethylketoxime)silane, vinyltri(methylethylketoxime)silane, phenyltri(methylethylketoxime)silane, propyltri(methylethylketoxime)silane, tetra(methylethylketoxime)silane, 3,3,3-trifluoropropyltri(methylethylketoxime)silane, 3-chloropropyltri(methylethylketoxime)silane, methyltri(dimethylketoxime)silane, methyltri(diethylketoxime)silane, methyltri(methylisopropylketoxime)silane, tri(cyclohexanoxime)silane, and partial hydrolytic condensates thereof. They may be used alone or in combination of two or more.

An appropriate amount of the crosslinker compounded is 0.5 to 20 parts, and more preferably 1 to 10 parts per 100 parts by weight of the organopolysiloxane. Less than 0.5 part by weight of the crosslinker may lead to insufficient crosslinking whereas more than 20 parts by weight of the crosslinker may result in a cured composition which is too hard and be uneconomical.

### Component (B)

Component (B) is a silicone oil having a polyether group, a long-chain alkyl group, and an aralkyl group in a molecule. This component is essential for imparting an ability to prevent fouling of aquatic organisms. The silicone oil should have all of polyether, long-chain alkyl and aralkyl groups in one molecule.

These substituent groups have their own effects, specifically low surface tension due to the polyether group, water repellency due to the long-chain alkyl group, and parting property due to the aralkyl group. A combination of all these groups enables to form a coating which is resistant to fouling of aquatic organisms.

It is noted that even when two or more silicone oils each having one or two groups selected from polyether, long-chain alkyl, and aralkyl groups in a molecule are combined to formulate a composition containing polyether, long-chain alkyl, and aralkyl groups, no synergistic effects are observed, that is, a coating resistant to fouling of aquatic organisms is not obtainable.

Inventive polyether groups are of the following structure.

-CₖH₂ₖ-O- (C₂H₄O)ₘ- (C₃H₆O)ₙ-R¹

Herein k is an integer of 1 to 3, preferably 2 or 3, and most preferably 3, m and n each are an integer of 0 to 40, and m+n is an integer of 1 to 50, preferably 3 to 40. R¹ is a group selected from hydrogen, methyl, butyl, allyl, and acetyl. Exemplary polyether groups are given below.
-(CH₂)₃-O-(C₂H₄O)₃-H, -(CH₂)₃-O-(C₃H₆O)₂₅-H,
-(CH₂)₃-O-(C₂H₄O)₈-H, -(CH₂)₃-O-(C₂H₄O)₁₁-(C₃H₆O)₄-H,
-(CH₂)₃-O-(C₂H₄O)₁₆-H, -(CH₂)₃-O-(C₂H₄O)₃₁-(C₃H₆O)₁₀-H,
-(CH₂)₃-O-(C₂H₄O)₆-CH₃, -(CH₂)₃-O-(C₃H₆O)₈-(C₂H₄O)₂₃-C₄H₉,
-(CH₂)₃-O-(C₂H₄O)₉-CH₃, -(CH₂)₃-O-(C₃H₆O)₁₅-(C₂H₆O)₁₅-C₄H₉,
-(CH₂)₃-O-(C₂H₄O)₃₃-CH₃,and

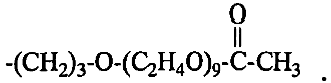

Inventive long-chain alkyl groups are of the formula:

-CₐH₂ₐ₊₁

wherein a is an integer of 4 to 20. Exemplary long-chain alkyl groups include butyl, pentyl, hexyl, heptyl, octyl, nonyl, decyl, octadecyl and the like.

Inventive aralkyl groups are aralkyl groups of 7 to 10 carbon atoms as shown below.

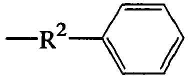

Herein R² is a C₁-C₄ alkylene group such as methylene, ethylene, propylene, and butylene, which may be either straight or branched. Exemplary aralkyl groups are given below.

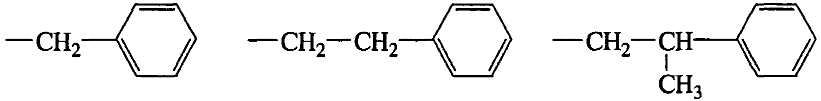

The silicone oil contains per molecule at least one for each of polyether, long-chain alkyl, and aralkyl groups, and preferably 1 to 20 polyether groups, 1 to 50 long-chain alkyl groups, and 1 to 20 aralkyl groups. These substituent groups may be present at any positions such as side chains or ends of the polymer as long as they are contained in a common molecule, usually a dimethylsilicone molecule.

Particularly suitable examples of the silicone oil as component (B) include compounds of the following structures.

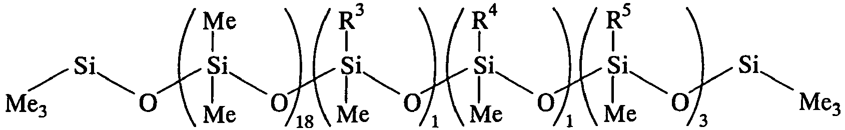

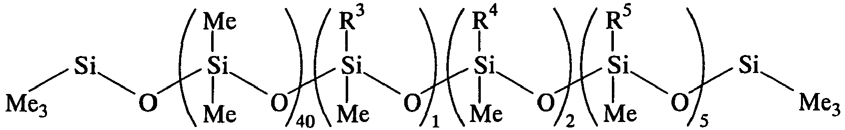

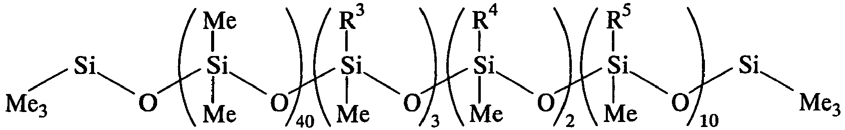

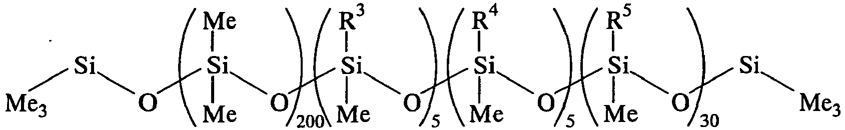

Herein Me is methyl, R³ is the group:

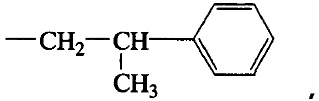

R⁴ is -C₃H₆O(C₂H₄O)₉-COCH₃, and R⁵ is -(CH₂)₇CH₃. Note that the number of repeating units is an average value and the repeating units may be randomly arranged.

The silicone oil should preferably have a number average molecular weight (Mn) of 250 to 100,000 and more preferably 500 to 60,000, as measured by gel permeation chromatography (GPC) versus polystyrene standards. The silicone oil with a Mn of less than 250 may achieve poor antifouling property whereas the silicone oil with a Mn in excess of 100,000 may give too viscous compositions which are inconvenient to work.

Also the silicone oil should preferably have a viscosity at 23°C of 20 to 30,000 mPa-s, and more preferably 30 to 10,000 mPa-s. The silicone oil having a viscosity of less than 20 mPa-s at 23°C may achieve poor antifouling property whereas the silicone oil with a viscosity in excess of 30,000 mPa-s may give too viscous compositions which are inconvenient to work.

In the invention, one or multiple members selected from the foregoing silicone oils are used in a total amount of 1 to 200 parts, preferably 5 to 150 parts, and more preferably 10 to 100 parts by weight per 100 parts by weight of component (A). A composition comprising a specific amount of the silicone oil, when used as antifouling paint, forms a coating which is excellent in both antifouling property and film strength. Outside the range, a less amount of the silicone oil achieves poor antifouling and a larger amount leads to a lowering of film strength.

### Other components

In addition to the silicone oil specified above, the composition of this invention may further comprise other silicone oils which are well known as the bleed oil for antifouling paints. Suitable examples include dimethylsilicone oil and modified forms of dimethylsilicone oil such as, for example, methylphenylsilicone oil in which some methyl groups are replaced by phenyl groups, amino-modified silicone oil in which some methyl groups are replaced by monoamine, diamine or amino-polyether groups, epoxy-modified silicone oil in which some methyl groups are replaced by epoxy, alicyclic epoxy, epoxy-polyether or epoxy-aralkyl groups, carbinol-modified silicone oil in which some methyl groups are replaced by carbinol groups, mercapto-modified silicone oil in which some methyl groups are replaced by mercapto groups, carboxyl-modified silicone oil in which some methyl groups are replaced by carboxyl groups, methacryl-modified silicone oil in which some methyl groups are replaced by methacrylic groups, polyether-modified silicone oil in which some methyl groups are replaced by polyether groups, long-chain alkyl-modified silicone oil in which some methyl groups are replaced by long-chain alkyl or long-chain alkyl and aralkyl groups, higher fatty acid-modified silicone oil in which some methyl groups are replaced by higher fatty acid ester groups, and fluoroalkyl-modified silicone oil in which some methyl groups are replaced by fluoroalkyl groups. Inter alia, methylphenylsilicone oil, polyether-modified silicone oil, and long-chain alkyl-modified silicone oil are preferably used in the composition.

When the bleed oil is compounded, it may be preferably added in an amount of 1 to 200 parts, and more preferably 5 to 150 parts by weight per 100 parts by weight of component (A).

The composition may further comprise the following antifouling agents. The antifouling agents may be either inorganic or organic. Conventional well-known inorganic antifouling agents may be used. Particularly copper and inorganic copper compounds are preferred. Examples of the organic antifouling agent include metal pyrithiones of the following formula (i): 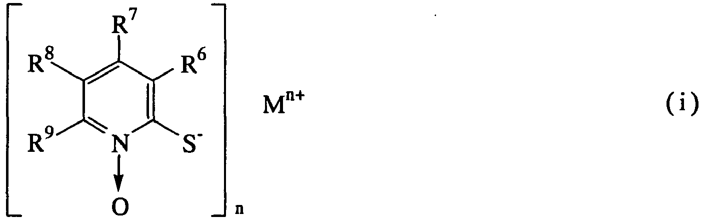 wherein R⁶ to R⁹ are each independently hydrogen, alkyl, alkoxy or haloalkyl, M is a metal atom selected from Cu, Zn, Na, Mg, Ca, Ba, Pb, Fe, and Al, and n is a valence number of the metal; tetramethylthiuram disulfide, carbamate compounds such as zinc dimethyldithiocarbamate and manganese 2-ethylenebis(dithiocarbamate), 2,4,5,6-tetrachloroisophthalonitrile, N,N-dimethyldichlorophenyl urea, 4,5-dichloro-2-n-octyl-3(2H)-isothiazoline, 2,4,6-tricholorophenyl maleimide, 2-methylthio-4-t-butylamino-6-cyclopropyl-s-triazine and the like.

Preferred organic antifouling agents include copper pyrithiones (of formula (i) wherein M=Cu), zinc pyrithiones (of formula (i) wherein M=Zn), N,N-dimethyldichlorophenyl urea, 2,4,6-tricholorophenyl maleimide, 2-methylthio-4-t-butylamino-6-cyclopropyl-s-triazine, 4,5-dichloro-2-n-octyl-4-isothiazolin-3-one, and 2,4,5,6-tetrachloroisophthalonitrile. More preferred organic antifouling agents are metal pyrithiones and/or 4,5-dichloro-2-n-octyl-4-isothiazolin-3-one, with a mixture thereof achieving better antifouling property. Further preferably, copper pyrithiones and/or 4,5-dichloro-2-n-octyl-4-isothiazolin-3-one is used, with a mixture thereof being more preferred.

When the organic antifouling agent is used, it is usually added in an amount of preferably 0.1 to 20%, and more preferably 0.5 to 10% by weight based on the total amount of the composition. When the inorganic antifouling agent is used, it is usually added in an amount of preferably 1 to 200%, and more preferably 5 to 100% by weight based on the total amount of the composition.

In the embodiment wherein component (A) is a room temperature-curable organopolysiloxane, catalysts may be added to the composition for promoting cure. Use may be made of various curing catalysts commonly used in conventional room temperature-curable compositions of the condensation curable type. Exemplary catalysts include metal salts of organocarboxylic acids such as lead 2-ethyloctoate, dibutyltin dioctoate, dibutyltin acetate, dibutyltin dilaurate, butyltin 2-ethylhexoate, iron 2-ethylhexoate, cobalt 2-ethylhexoate, manganese 2-ethylhexoate, zinc 2-ethylhexoate, stannous caprylate, tin naphthenate, tin oleate, tin butanoate, titanium naphthenate, zinc naphthenate, cobalt naphthenate, and zinc stearate; organotitanic acid esters such as tetrabutyl titanate, tetra-2-ethylhexyl titanate, triethanolamine titanate and tetra(isopropenyloxy)titanate; organotitanium compounds and chelates such as organosiloxytitanium, β-carbonyltitanium, diisopropoxytitanium bis(ethylacetoacetate) and tetra(acetylacetonato)titanium; alkoxyaluminum compounds; aminoalkyl-substituted alkoxysilanes such as 3-aminopropyltriethoxysilane and N-(trimethoxysilylpropyl)ethylenediamine; amine compounds and salts thereof such as hexylamine and dodecylamine phosphate; alkali metal salts of lower fatty acids such as potassium acetate, sodium acetate and lithium bromate; dialkylhydroxylamines such as dimethylhydroxylamine and diethylhydroxylamine; and guanidyl-containing silanes or siloxanes as represented by the following formulae. 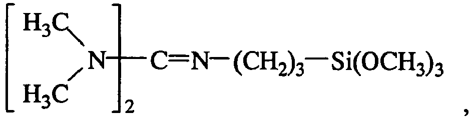 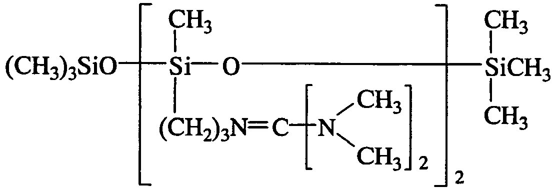 These catalysts may be used alone or in admixture.

When used, typically the amount of the curing catalyst is not particularly limited. It may be used in a catalytic amount. Typically, the catalyst is preferably used in an amount of 0.01 to 20 parts, and more preferably 0.1 to 10 parts by weight per 100 parts by weight of the room temperature curable organopolysiloxane as component (A). If the amount of the catalyst, when used, is below the range, the resulting composition may become less curable depending on the type of crosslinking agent. If the amount of the catalyst is above the range, the resulting composition may become less storage stable.

For the reinforcement or extending purpose, fillers may be used in the inventive composition. Suitable fillers include fumed silica, quartz, diatomaceous earth, titanium oxide, aluminum oxide, lead oxide, iron oxide, carbon black, bentonite, graphite, calcium carbonate, mica, clay, glass beads, glass microballoons, shirasu balloons, glass fibers, polyvinyl chloride beads, polystyrene beads, and acrylic beads.

When used, typically the amount of the filler compounded is preferably 1 to 50 parts and more preferably 5 to 30 parts by weight per 100 parts by weight of component (A) though not limited thereto. When used, an amount below the range of the filler may result in a cured composition with lower rubber physical properties, and an amount beyond the range of the filler may result in a composition having too high a viscosity to work as by mixing and coating.

In the inventive composition, optional additives may be compounded in ordinary amounts as long as the objects of the invention are not compromised. Suitable additives include plasticizers, colorants such as pigments, flame retardants, thixotropic agents, bactericides, fungicides, and adhesion improvers such as carbon-functional silanes having amino, epoxy or thiol groups (e.g., γ-glycidoxypropyltrimethoxysilane and aminopropyltriethoxysilane).

The composition should preferably have a viscosity of not more than 50,000 mPa-s at 23°C, and more preferably not more than 30,000 mPa-s at 23°C for ease of coating.

The inventive composition is applicable to underwater structures to form a coating on their surface. Suitable underwater structures include ships, harbor facilities, buoys, pipe lines, bridges, submarine stations, submarine oil well excavation units, power plant water conduits, fish culture nets and fixed shore nets. The cured coating of the composition is non-toxic and non-detrimental to the environment, and exhibits the antifouling effect of preventing adhesion and growth of aquatic organisms over a long term.

When applied to underwater structures, the coating of the composition typically has a thickness of 10 to 1,000 µm, and especially 50 to 500 µm. Once the composition is applied at room or normal temperature, it may be cured at room temperature (lower than 50°C), by heating (at or above 50°C), or by application of UV or electron beam. Preferably the composition is applied and cured at room or normal temperature.

The cured coating has a contact angle with water. In a preferred embodiment, when the cured coating is immersed in seawater at 0 to 60°C for 12 months, the contact angle of the coating experiences a change within 20 degrees, and more preferably within 15 degrees before and after immersion. The contact angle with water of a cured coating is so closely related to the deposition of aquatic organisms that a cured coating whose contact angle experiences only a small change before and after immersion in seawater is fully resistant to deposition of aquatic organisms. The contact angle is a measurement by a contact angle meter, Drop Master 500 (Kyowa Interface Science Co., Ltd.).

### EXAMPLE

Examples and Comparative Examples are given below for further illustrating the invention although the invention is not limited thereto. All parts are by weight. The viscosity is a measurement at 23°C by a rotational viscometer.

### Example 1

A composition was prepared by intimately premixing 100 parts of α,ω-dihydroxy-dimethylpolysiloxane having a viscosity of 1500 mPa-s with 10 parts of fumed silica having a specific surface area of 110 m²/g as measured by the BET method and continuously mixing and heating at 150°C under subatmospheric pressure for 2 hours. The premix was further mixed with 12 parts of vinyltris(methylethylketoxime)silane, 1 part of γ-aminopropyltriethoxysilane, and 10 parts of a polyether/long-chain alkyl/aralkyl-modified silicone oil A of the following formula (1) under subatmospheric pressure until uniform.

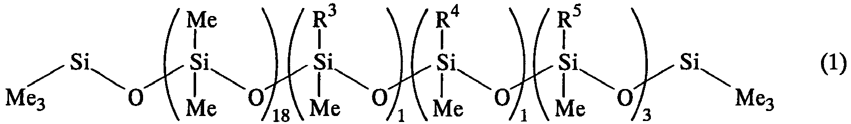

Herein Me is methyl, R³ is:

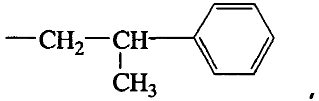

R⁴ is C₃H₆O(C₂H₄O)₉-COCH₃, and R⁵ is -(CH₂)₇CH₃. The number of repeating units is an average value and the repeating units are randomly arranged.

### Example 2

A composition was prepared as in Example 1 except that the amount of polyether/long-chain alkyl/aralkyl-modified silicone oil A was changed to 50 parts.

### Example 3

A composition was prepared as in Example 1 except that a polyether/long-chain alkyl/aralkyl-modified silicone oil B of the following formula (2) was used instead of polyether/long-chain alkyl/aralkyl-modified silicone oil A in Example 1.

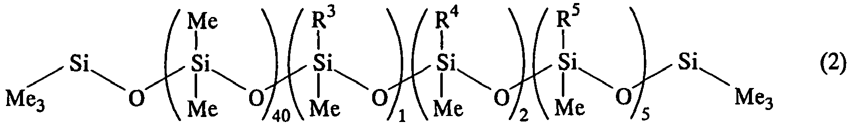

Herein Me is methyl, R³ is:

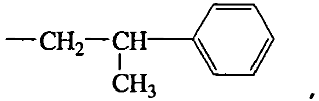

R⁴ is -C₃H₆O(C₂H₄O)₉-COCH₃, and R⁵ is -(CH₂)₇CH₃. The number of repeating units is an average value and the repeating units are randomly arranged.

### Reference Example 4

A composition was prepared by premixing 100 parts of a vinyl chloride-isobutyl ether copolymer (Laroflex®, BASF), 25 parts of zinc oxide, 5 parts of fumed silica having a specific surface area of 110 m²/g as measured by the BET method, 25 parts of talc, 20 parts of xylene, and 20 parts of methyl isobutyl ketone and mixing the premix with 20 parts of polyether/long-chain alkyl/aralkyl-modified silicone oil A in Example 1 until uniform.

### Reference Example 5

A four-neck flask equipped with a stirrer, thermometer, reflux condenser, N₂ gas inlet tube, and dropping funnel was charged with 40 parts of xylene, and heated to 90°C while introducing N₂ gas. A mixture (X) of 20 parts of tris(trimethylsiloxy)-γ-methacryloyloxypropylsilane, 50 parts of methyl methacrylate, 30 parts of butyl acrylate, and 1 part of azobisisobutyronitrile was added dropwise from the dropping funnel over 3 hours. After the addition of mixture (X), 30 parts of xylene was added dropwise, followed by ripening at 90°C for 4 hours and cooling. There was obtained a silicone-containing acrylic resin. This resin, 100 parts, was mixed with 20 parts of polyether/long-chain alkyl/aralkyl-modified silicone oil A in Example 1 until a uniform composition was obtained.

### Comparative Example 1

A composition was prepared as in Example 1 except that polyether/long-chain alkyl/aralkyl-modified silicone oil A in Example 1 was not added.

### Comparative Example 2

A composition was prepared as in Example 1 except that the amount of polyether/long-chain alkyl/aralkyl-modified silicone oil A was changed to 250 parts.

### Comparative Example 3

A composition was prepared as in Example 1 except that aralkyl-modified oil KF410 (Shin-Etsu Chemical Co., Ltd.) having a viscosity of 900 mPa-s was used instead of polyether/long-chain alkyl/aralkyl-modified silicone oil A in Example 1.

### Comparative Example 4

A composition was prepared as in Example 1 except that long-chain alkyl-modified oil KF414 (Shin-Etsu Chemical Co., Ltd.) having a viscosity of 100 mPa-s was used instead of polyether/long-chain alkyl/aralkyl-modified silicone oil A in Example 1.

### Comparative Example 5

A composition was prepared as in Example 1 except that polyether-modified oil KF351A (Shin-Etsu Chemical Co., Ltd.) having a viscosity of 70 mPa-s was used instead of polyether/long-chain alkyl/aralkyl-modified silicone oil A in Example 1.

### Comparative Example 6

A composition was prepared as in Example 1 except that long-chain alkyl/aralkyl-modified oil X-22-1877 (Shin-Etsu Chemical Co., Ltd.) having a viscosity of 850 mPa-s was used instead of polyether/long-chain alkyl/aralkyl-modified silicone oil A in Example 1.

### Comparative Example 7

A composition was prepared as in Example 1 except that 10 parts of polyether-modified oil KF351A (Shin-Etsu Chemical Co., Ltd.) having a viscosity of 70 mPa-s and 10 parts of long-chain alkyl/aralkyl-modified oil X-22-1877 (Shin-Etsu Chemical Co., Ltd.) having a viscosity of 850 mPa-s were used instead of polyether/long-chain alkyl/aralkyl-modified silicone oil A in Example 1.

### Performance Tests

The thus obtained compositions were evaluated for uncured physical properties, cured physical properties, a contact angle, and antifouling property according to the following test procedures. The results are shown in Table 1 and 2.

### (A) Uncured physical properties (tack-free and viscosity)

A tack-free time and a viscosity were measured according to JIS K-6249.

### (B) Cured physical properties (hardness, elongation, and tensile strength)

A composition was molded into a sheet of 2 mm thick and cured at 23°C and 50% RH for 7 days. Rubber physical properties of the sheet were measured according to JIS K-6249.

### (C) Contact angle with water

A contact angle with pure water of the sheet formed in (B) was measured by a contact angle meter, Drop Master 500 (Kyowa Interface Science Co., Ltd.). Also, the sheet was immersed in seawater at 50°C for a certain period of time, after which a contact angle was measured again.

### (D) Antifouling

An epoxy base anti-corrosion paint was previously coated onto plates to a thickness of 200 µm. Compositions were coated thereon and kept at 23°C and 50% RH for 7 days, during which they cured into films of 300 µm thick, completing test specimens. In a suspension test, the specimens were suspended at a depth of 1.5 m in seawater offshore Kanagawa, Japan for 24 months. The deposition of sea organisms including shells (e.g., barnacle) and seaweed on the specimens was observed. The specimens were rated as follows.

| Rating | Sea organism-deposited area (%) |
|---|---|
| A | 0% |
| B | more than 0% to less than 10% |
| C | 10% to less than 25% |
| D | 25% to less than 50% |
| E | 50% to 100% |

### Examples 4 and 5 are reference examples.

**Table 1**

| | | Example | | | | |
|---|---|---|---|---|---|---|
| | | 1 | 2 | 3 | 4 | 5 |
| Formulation | Resin | Polysiloxane | Polysiloxane | Polysiloxane | Vinyl chloride-isobutyl ether copolymer | Silicone-containing acrylic resin |
| | Amount of resin, pbw | 100 | 100 | 100 | 100 | 100 |
| | Oil | A | A | B | A | A |
| | Amount of oil, pbw | 10 | 50 | 20 | 20 | 20 |
| Uncured physical properties | Tack-free time, min | 30 | 45 | 30 | - | - |
| | viscosity, Pa-s | 6 | 3 | 7 | - | - |
| Cured physical properties | Hardness (Type A) | 23 | 15 | 22 | Not measured | Not measured |
| | Elongation, % | 300 | 400 | 320 | | |
| | Tensile strength, MPa | 1.5 | 1.0 | 1.5 | | |
| Contact angle (degree) | Initial | 61 | 58 | 55 | 62 | 55 |
| | 6 months | 63 | 58 | 55 | 45 | 40 |
| | 12 months | 62 | 60 | 56 | 45 | 42 |
| Antifouling | 3 months | A | A | A | A | A |
| | 6 months | A | A | A | A | A |
| | 12 months | A | A | A | B | B |
| | 24 months | A | A | B | C | C |

**Table 2**

| | | Comparative Example | | | | | | |
|---|---|---|---|---|---|---|---|---|
| | | 1 | 2 | 3 | 4 | 5 | 6 | 7 |
| Formulation | Resin | Polysiloxane | Polysiloxane | Polysiloxane | Polysiloxane | Polysiloxane | Polysiloxane | Polysiloxane |
| | Amount of resin, pbw | 100 | 100 | 100 | 100 | 100 | 100 | 100 |
| | Oil | none | A | KF410 | KF414 | KF351A | 1877 | 351/1877 |
| | Amount of oil, pbw | none | 250 | 20 | 20 | 20 | 20 | 10/10 |
| Uncured physical properties | Tack-free time, min | 30 | 60 | 30 | 30 | 30 | 30 | 30 |
| | Viscosity, Pa-s | 10 | 1 | 8 | 6.5 | 6 | 8 | 7 |
| Cured physical properties | Hardness (Type A) | 35 | 5 | 22 | 23 | 23 | 22 | 23 |
| | Elongation, % | 240 | 200 | 400 | 300 | 280 | 300 | 290 |
| | Tensile strength, MPa | 2.2 | 0.3 | 1.4 | 1.5 | 1.3 | 1.4 | 1.3 |
| Contact angle (degree) | Initial | 108 | 55 | 104 | 108 | 103 | 104 | 103 |
| | 6 months | 100 | 56 | 100 | 102 | 99 | 100 | 98 |
| | 12 months | 77 | 62 | 97 | 79 | 80 | 80 | 81 |
| Antifouling | 3 months | B | A | B | B | A | A | A |
| | 6 months | C | C* | C | C | B | C | B |
| | 12 months | E | D* | D | D | D | C | C |
| | 24 months | E | E* | E | E | E | E | D |

| | | | | | | | | |
|---|---|---|---|---|---|---|---|---|
| * Peeling of the coating was observed. | | | | | | | | |

In respect of numerical ranges disclosed in the present application it will of course be understood that in the normal way the technical criterion for the upper limit is different from the technical criterion for the lower limit, i.e. the upper and lower limits are intrinsically distinct proposals.

## Claims

1. An antifouling coating composition comprising:
(A) 100 parts by weight of room temperature-curable silicone resin, and
(B) 1 to 200 parts by weight of silicone oil having a polyether, a long-chain alkyl and an aralkyl group in the molecule, said polyether, long-chain alkyl, and aralkyl groups having the following structures:
polyether group: -CₖH₂ₖ-O-(C₂H₄O)ₘ-(C₃H₆O)ₙ-R¹
wherein k is an integer of 1 to 3, m and n are integers of 0 to 40, m+n is an integer of 1 to 50, R¹ is a group selected from hydrogen, methyl, butyl, allyl and acetyl;
long-chain alkyl group: -CₐH₂ₐ₊₁
wherein a is an integer of 4 to 20, and
aralkyl group: 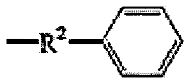 wherein R² is alkylene group of 1 to 4 carbon atoms.

2. A composition of claim 1 wherein the room temperature-curable silicone resin is an organopolysiloxane having at least two hydroxyl groups or hydrolysable groups.

3. A composition of claim 2 wherein the organopolysiloxane is one represented by the following formula (i) or (ii): 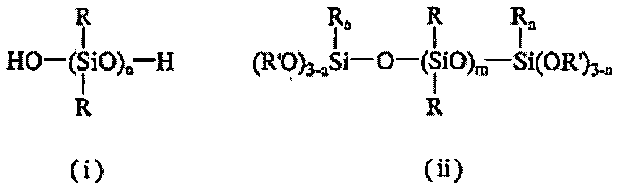 wherein R is alkyl group, cycloalkyl group, alkenyl group, aryl group, aralkyl group, or a substituted form of the foregoing groups in which some or all hydrogen atoms are substituted by halogen atom or cyano group, n and m are numbers such that the diorganopolysiloxane has a viscosity of 20 to 1,000,000 mPa.s at 23°C, and a is 0 or 1.

4. A composition of any one of claims 2 to 3 which further comprises a silane having hydrolysable groups, and/or a partial hydrolytic condensate thereof, as crosslinker.

5. A composition of any one of claims 1 to 4 wherein component (B) is a silicone oil having a structure selected from the following: 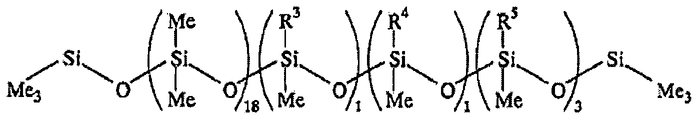 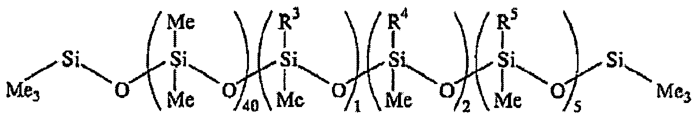 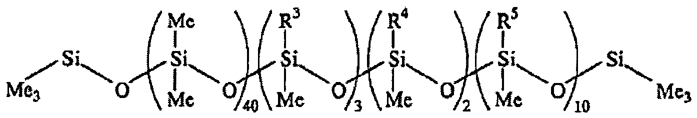 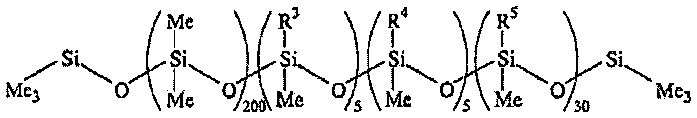 wherein Me is methyl, R³ is the group: 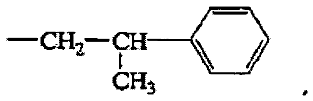 R⁴ is -C₃H₆O(C₂H₄O)₉-COCH₃ and R⁵ is -(CH₂)₇CH₃, the number of repeating units is an average value and the repeating units may be randomly arranged.

6. A composition of any one of claims 1 to 5 which cures into a coating whose contact angle with water, before and after immersion in seawater, experiences a change within 20 degrees.

7. An underwater structure which is coated with a cured composition of any one of claims 1 to 6.

8. The use of a composition according to any one of claims 1 to 6 for coating a structure for underwater use.

## Patentansprüche

1. Antifouling-Beschichtungszusammensetzung, umfassend:
(A) 100 Gewichtsteile eines bei Raumtemperatur härtbaren Silikonharzes, und
(B) 1 bis 200 Gewichtsteile Silikonöl, das einen Polyether, ein langkettiges Alkyl und eine Aralkylgruppe im Molekül aufweist, wobei der Polyether, das langkettige Alkyl und die Aralkylgruppen die folgenden Strukturen aufweisen:
Polyethergruppe: -CₖH₂ₖ-O-(C₂H₄O)ₘ-(C₃H₆O)ₙ-R¹,
worin k eine ganze Zahl von 1 bis 3 ist, m und n ganze Zahlen von 0 bis 40 sind, m+n eine ganze Zahl von 1 bis 50 ist, R¹ eine aus Wasserstoff, Methyl, Butyl, Allyl und Acetyl ausgewählte Gruppe ist;
langkettige Alkylgruppe: -CₐH₂ₐ₊₁,
worin a eine ganze Zahl von 4 bis 20 ist, und
Aralkylgruppe: 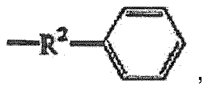 worin R² eine Alkylengruppe mit 1 bis 4 Kohlenstoffatomen ist.

2. Zusammensetzung nach Anspruch 1, worin das bei Raumtemperatur härtbare Silikonharz ein Organopolysiloxan ist, das zumindest zwei Hydroxylgruppen oder hydrolysierbare Gruppen aufweist.

3. Zusammensetzung nach Anspruch 2, worin das Organopolysiloxan durch die folgende Formel (i) oder (ii) dargestellt ist: 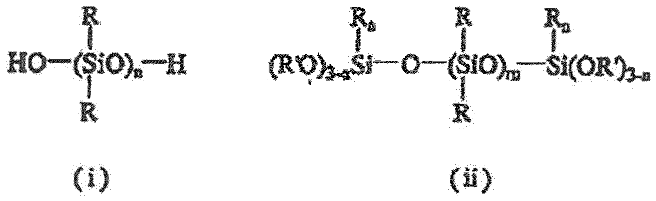 worin R eine Alkylgruppe, Cycloalkylgruppe, Alkenylgruppe, Arylgruppe, Aralkylgruppe oder eine substituierte Form der vorhergehenden Gruppen ist, in der manche oder alle Wasserstoffatome durch ein Halogenatom oder eine Cyanogruppe ersetzt sind, n und m solche Zahlen sind, dass das Diorganopolysiloxan bei 23 °C eine Viskosität von 20 bis 1.000.000 mPa·s aufweist, und a = 0 oder 1 ist.

4. Zusammensetzung nach einem der Ansprüche 2 bis 3, die weiters ein Silan, das hydrolysierbare Gruppen umfasst, und/oder ein partielles hydrolytisches Kondensat davon als Vernetzer aufweist.

5. Zusammensetzung nach einem der Ansprüche 1 bis 4, worin die Komponente (B) ein Silikonöl ist, das eine aus den folgenden ausgewählte Struktur aufweist: 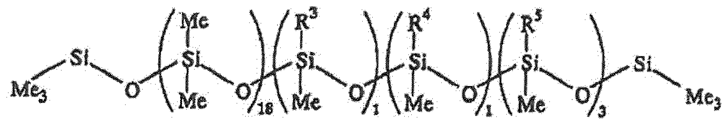 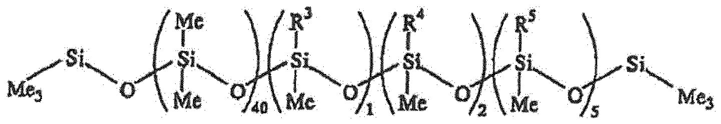 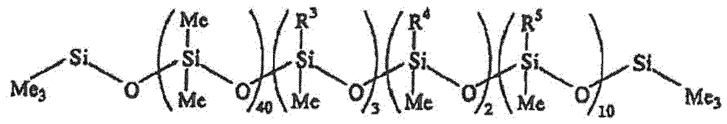 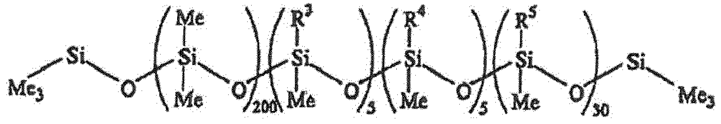 worin Me Methyl ist und R³ die Gruppe 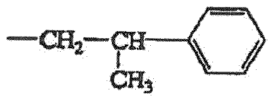 ist, R⁴ -C₃H₆O(C₂H₄O)₉-COCH₃ und R⁵ -(CH₂)₇CH₃ ist, wobei die Anzahl an Grundeinheiten ein Mittelwert ist und die Grundeinheiten zufällig angeordnet sein können.

6. Zusammensetzung nach einem der Ansprüche 1 bis 5, die zu einer Beschichtung aushärtet, deren Kontaktwinkel mit Wasser vor und nach dem Eintauchen in Salzwasser eine Veränderung innerhalb von 20 Grad erfährt.

7. Unterwasserstruktur, die mit einer gehärteten Zusammensetzung nach einem der Ansprüche 1 bis 6 beschichtet ist.

8. Verwendung einer Zusammensetzung nach einem der Ansprüche 1 bis 6 zum Beschichten einer Struktur zur Verwendung unter Wasser.

## Revendications

1. Composition de revêtement antifouling comprenant :
(A) 100 parties en poids de résine de silicone durcissable à température ambiante, et
(B) 1 à 200 parties en poids d'huile de silicone ayant un polyéther, un alkyle de chaîne longue et un groupe aralkyle dans la molécule, ledit polyéther, alkyle de chaîne longue et groupes aralkyles ayant les structures suivantes :
groupe de polyéther : -CₖH₂k-O-(C₂H₄O)ₘ- (C₃H₆O)ₙ-R¹
où k est un entier de 1 à 3, m et n sont des entiers de 0 à 40, m+n est un entier de 1 à 50, R¹ est un groupe sélectionné parmi hydrogène, méthyle, butyle, allyle et acétyle ;
groupe alkyle de chaîne longue : -CₐH₂ₐ₊₁
où a est un entier de 4 à 20, et
groupe aralkyle : 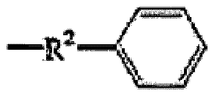 où R2 est un groupe alkylène de 1 à 4 atomes de carbone.

2. Composition selon la revendication 1, dans laquelle la résine de silicone durcissable à température ambiante est un organopolysiloxane ayant au moins deux groupes hydroxyles ou groupes hydrolysables.

3. Composition selon la revendication 2, dans laquelle l'organopolysiloxane et un représenté par les formules suivantes (i) ou (ii) : 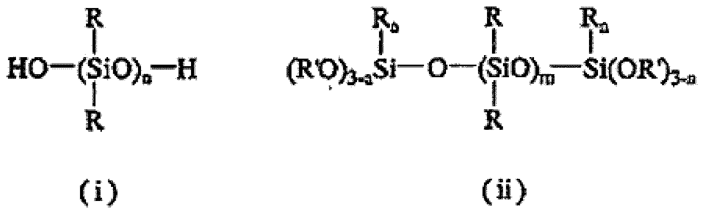 où R est un groupe alkyle, groupe cycloalkyle, groupe alkényle, groupe aryle, groupe aralkyle ou une forme substituée des groupes qui précèdent où quelques uns ou tous les atomes d'hydrogène sont substitués par un atome d'halogène ou groupe cyano, n et m sont des nombres de sorte que le diorganopolysiloxane a une viscosité de 20 à 1.000 000 mPa.s à 23°C, et a est 0 ou 1.

4. Composition selon l'une quelconque des revendications 2 à 3, qui comprend en outre un silane ayant des groupes hydrolysables, et/ou un condensat hydrolytique partiel de celui-ci, comme agent de réticulation.

5. Composition selon l'une quelconque des revendications 1 à 4, où le composant (B) est une huile de silicone ayant une structure sélectionnée parmi les suivantes : 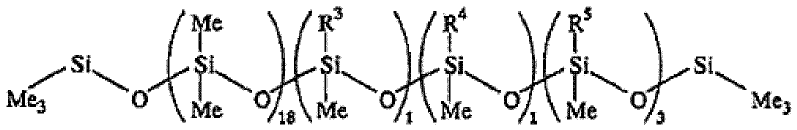 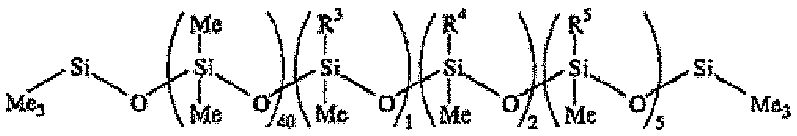 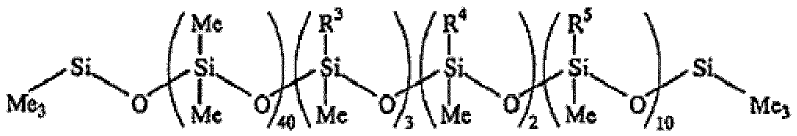 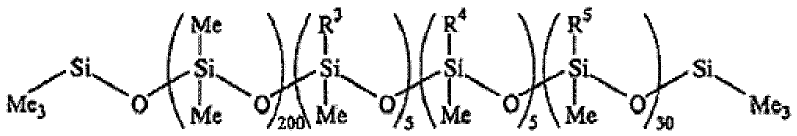 où Me est méthyle, R³ est le groupe : 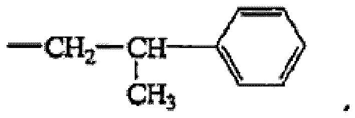 R4 est -C₃H₆0(C₂H₄0)₉-COCH₃ et R⁵ est - (CH₂)₇CH₃, le nombre d'unités de répétition est une valeur moyenne et les unités de répétition peuvent être agencées d'une manière aléatoire.

6. Composition selon l'une quelconque des revendications 1 à 5, qui durcit en un revêtement dont l'angle de contact avec l'eau, avant et après l'immersion dans de l'eau de mer, subit un changement dans les 20 degrés.

7. Structure sous-marine qui est revêtue d'une composition durcie selon l'une quelconque des revendications 1 à 6.

8. Utilisation d'une composition selon l'une quelconque des revendications 1 à 6 pour le revêtement d'une structure pour l'utilisation sous-marine.
